# EUROPÄISCHE PATENTSCHRIFT

(11) **EP 3 673 642 B1**
(45) Veröffentlichungstag und Bekanntmachung des Hinweises auf die Patenterteilung: **02.06.2021**
(21) Anmeldenummer: 18752150.5
(22) Anmeldetag: 07.08.2018
(51) Int. Cl.: H04L 29/08, H04L 29/06

(54) **VERFAHREN ZUR DEAKTIVIERUNG VON STEUERKANÄLEN**
METHOD FOR DEACTIVATING CONTROL CHANNELS
PROCÉDÉ DE DÉSACTIVATION DE CANAUX DE COMMANDE

(30) Priorität: 27.08.2017 DE 102017008051
(43) Veröffentlichungstag der Anmeldung: 01.07.2020
(73) Patentinhaber: Rückert, Tobias, 73650 Winterbach (DE)
(72) Erfinder: Rückert, Tobias, 73650 Winterbach (DE)
(74) Vertreter: Heidinger, Andreas
(86) Internationale Anmeldenummer: PCT/EP2018/071412
(87) Internationale Veröffentlichungsnummer: WO 2019/042725

(56) Entgegenhaltungen:
- US-A1- 2015 006 695
- US-A1- 2016 004 871
- US-A1- 2017 208 057

## Beschreibung

Die Erfindung betrifft ein Verfahren zur Deaktivierung von Steuerkanälen zwischen individuellen Kommunikationsplattformen und Gruppen von Zielgeräten mit den Merkmalen des Anspruchs 1.

Viele elektronische Geräte für den industriellen, gewerblichen wie auch den privaten Gebrauch verfügen über eine Schnittstelle, über die Informationen, wie beispielsweise Statusinformationen oder Messwerte ausgelesen werden können oder das Gerät angesteuert, beispielsweise aktiviert, deaktiviert oder konfiguriert werden kann. Beispiele dafür sind im privaten Bereich Wetterstationen, die die Temperatur und die Luftqualität messen, Überwachungskameras, Klimaanlagen, Fernsehgeräte, Heizungssteuerungen, Kühlschränke und im industriellen Bereich Bearbeitungsmaschinen oder Zugangssysteme. Derartige elektronische Geräte werden im Folgenden als Zielgeräte bezeichnet. Die Verbindung zu dem entsprechenden Gerät kann zumeist mittels spezieller Programme auf einem Computer, einem Tablet-Computer, einem Smartphone, einem so genannten Wearable Device oder einem anderen elektronischen Gerät, das Programme oder Apps ausführen kann, aufgebaut werden. Diese elektronischen Geräte werden im Folgenden als Endgeräte bezeichnet. Um die genannte Verbindung herstellen zu können, ist beispielsweise eine Kopplung über eine drahtlose Verbindung insbesondere das Internet notwendig. Es gibt Hersteller von Zielgeräten, die eine Plattform anbieten, über die mit einem oder mehreren Zielgeräten dieses Herstellers eine Verbindung hergestellt werden kann. Eine derartige Plattform kann als eine individuelle Kommunikationsplattform bezeichnet werden. Um diese individuelle Kommunikationsplattform nutzen zu können, ist dann wiederum ein spezielles Programm auf einem Endgerät eines Users notwendig. Die genannten Informationen werden dann in einem speziellen Protokoll übertragen, das von dem verwendeten Programm unterstützt wird. Die dabei verwendeten Protokolle der verschiedenen Hersteller, welche als Hersteller-Protokolle bezeichnet werden können, unterscheiden sich sehr stark. Ein User, der mit Zielgeräten verschiedener Hersteller Informationen austauschen möchte, muss daher verschiedene Endgeräte und/oder verschiedene Programme mit verschiedenen Protokollen benutzen. Die Zielgeräte eines ersten Herstellers können dabei als eine erste Gruppe von Zielgeräten angesehen werden, welche mit einer diesem Hersteller zugeordneten ersten individuellen Kommunikationsplattform mit einem ersten Herstellerprotokoll kommunizieren können. Analog dazu können Zielgeräte eines zweiten Herstellers als eine zweite Gruppe von Zielgeräten angesehen werden, welche mit einer diesem Hersteller zugeordneten zweiten individuellen Kommunikationsplattform mit einem zweiten Hersteller-Protokoll kommunizieren können.

Es ist beispielsweise aus der nicht vorveröffentlichten Deutschen Patentanmeldung des Anmelders DE102016014478 A1 bekannt, die Kommunikation des Users mit Endgeräten unterschiedlicher Hersteller dadurch zu vereinfachen, dass der User mit einer universellen Kommunikationsplattform kommuniziert, welche Steuerbefehle des Users an ein Endgerät so umsetzt, dass es von der zugehörigen individuellen Kommunikationsplattform verstanden wird und umgekehrt Meldungen des Zielgeräts, die von der zugehörigen individuellen Kommunikationsplattform weitergeleitet werden, dem User in verständlicher Form weiterleitet. Damit der User die universelle Kommunikationsplattform in der beschriebenen Weise nutzen kann, muss er sich bei der universellen Kommunikationsplattform authentifizieren. Dies kann er beispielsweise über sein Endgerät tun. In diesem Fall leitet die universelle Kommunikationsplattform Steuerbefehle, die von diesem Endgerät kommen, an die Zielgeräte weiter.

Um einen einfachen und dennoch sicheren Informationsaustausch zwischen einem User und einem Zielgerät zu ermöglichen, wird in der genannten nicht vorveröffentlichten Deutschen Patentanmeldung des Anmelders DE 102016014478 A1 ein Verfahren zur Zuordnung eines Zielgeräts zu einem User vorzuschlagen. Sobald diese Zuordnung erfolgt ist, kann der User sehr einfach mit verschiedensten Zielgeräten kommunizieren, ohne sich noch einmal authentifizieren zu müssen. Neben dem in der genannten Patentanmeldung beschriebenen Verfahren zur Zuordnung eines Endgeräts zu einem User sind auch weitere Verfahren zur Zuordnung möglich.

Sobald ein Endgerät einem User zugeordnet ist, kann er über sein Endgerät, die universelle Kommunikationsplattform und einen über eine erste individuelle Kommunikationsplattform realisierten ersten Steuerkanal eine erste Gruppe von Zielgeräten ansteuern. Ebenso kann er über sein Endgerät, die universelle Kommunikationsplattform und einen über eine zweite individuelle Kommunikationsplattform realisierten zweiten Steuerkanal eine zweite Gruppe von Zielgeräten ansteuern. Die universelle Kommunikationsplattform wandelt dabei eingegebene Befehle des Users an ein Zielgerät so um, dass es von der zugehörigen individuellen Kommunikationsplattform "verstanden" wird.

Wenn sich eine unbefugte Person Zugriff zum Endgerät des Users oder Zugriff auf eine vom User genutzte individuelle Kommunikationsplattform verschafft, beispielsweise wenn die unbefugte Person das Endgerät unerlaubt in ihren Besitzt bringt oder sich unerlaubt mit den Zugangsdaten des Users an einer individuellen Kommunikationsplattform anmeldet, kann diese unbefugte Person alle Endgeräte des Users missbräuchlich ansteuern.

Die US 2017/0208057 A1, US 2016/004871 A1 und US 2015/0006695 A1 beschreiben ebenfalls Verfahren zum Austausch von Informationen zwischen verschiedenen Endgeräten.

Es ist damit insbesondere die Aufgabe der Erfindung, ein Verfahren vorzuschlagen, mittels welchen Steuerkanäle zwischen individuellen Kommunikationsplattformen und Gruppen von Zielgeräten schnell und einfach deaktiviert werden können. Die genannte Aufgabe wird durch ein Verfahren mit den Merkmalen des Anspruchs 1 gelöst.

Ein erster Steuerkanal ist über eine erste individuelle Kommunikationsplattform zu einer ersten Gruppe von Zielgeräten realisiert. Ein zweiter Steuerkanal ist über eine zweite individuelle Kommunikationsplattform zu einer zweiten Gruppe von Zielgeräten realisiert. Damit kann ein User vor der Deaktivierung der Steuerkanäle über ein erstes Endgerät, eine universelle Kommunikationsplattform und den ersten Steuerkanal die erste Gruppe von Zielgeräten und über das erste Endgerät, die universelle Kommunikationsplattform und den zweiten Steuerkanal die zweite Gruppe von Zielgeräten ansteuern.

Erfindungsgemäß deaktiviert der User durch Übermitteln eines einzigen Deaktivierungsbefehls von einem Endgerät an die universelle Kommunikationsplattform den ersten und zweiten Steuerkanal, wobei die Deaktivierung durch Senden eines Befehls, die Kommunikationsverbindungen zwischen den universellen Kommunikationsplattformen und den zugehörigen Zielgeräten von der universellen Kommunikationsplattform an die erste und die zweite individuelle Kommunikationsplattform erfolgt. Wenn der User keinen Zugriff mehr auf das erste Endgerät hat, so übermittelt er den einzigen Deaktivierungsbefehl von einem zweiten Endgerät an die universelle Kommunikationsplattform. Falls der User noch Zugriff auf das erste Endgerät hat, aber sich beispielsweise eine unbefugte Person mit seinen Zugangsdaten an einer individuellen Kommunikationsplattform angemeldet hat und der User vorsorglich alle Kommunikationskanäle deaktivieren möchte, so kann er den einzigen Deaktivierungsbefehl auch vom ersten Endgerät an die universelle Kommunikationsplattform übermitteln.

Die universelle Kommunikationsplattform setzt den genannten Deaktivierungsbefehl so um, dass sie an jede individuelle Kommunikationsplattform einen passenden Deaktivierungsbefehl übermittelt, der von dieser individuellen Kommunikationsplattform "verstanden" wird. Da sich die individuellen Kommunikationsplattformen stark voneinander unterscheiden, ist üblicherweise für jede individuelle Kommunikationsplattform ein anderer Deaktivierungsbefehl notwendig.

Damit kann ein User mittels der Übermittlung nur eines einzigen Deaktivierungsbefehls an die universelle Kommunikationsplattform die Ansteuerung einer Vielzahl von Zielgeräten, die über unterschiedliche individuelle Kommunikationsplattformen angesteuert werden, mittels des ersten oder zweiten Endgeräts deaktivieren. Um dies ohne Nutzung des erfindungsgemässen Verfahrens erreichen zu können, müsste sich der User bei allen individuellen Kommunikationsplattformen separat anmelden und an jeder individuellen Kommunikationsplattform die Ansteuerung der Zielgeräte mittels des ersten oder zweiten Endgeräts deaktivieren. Das ist erstens sehr zeitaufwändig, zweitens muss der User seine Anmeldedaten (Benutzername und Passwort) für jede individuelle Kommunikationsplattform kennen und drittens ist die Bedienung der unterschiedlichen individuellen Kommunikationsplattformen nicht standardisiert, so dass der User die Deaktivierung an jeder individuellen Kommunikationsplattform auf eine andere Art durchführen muss. Der User würde damit ohne Verwendung des erfindungsgemäßen Verfahrens sehr viel Zeit benötigen und könnte im Extremfall die Deaktivierung auf Grund von nicht bekannten Anmeldedaten oder Problemen mit der Bedienung gar nicht durchführen. Da mit dem ersten Endgerät und einer individuellen Kommunikationsplattform auch sicherheitskritische Zielgeräte wie beispielsweise Alarmanlagen angesteuert und auch deaktiviert werden können, sollte im Notfall die Deaktivierung der Steuerkanäle zwischen ersten Endgerät und Zielgeräten sehr schnell erfolgen.

Die Kommunikation zwischen den Endgeräten, der universellen Kommunikationsplattform, den individuellen Kommunikationsplattformen und den Zielgeräten verläuft insbesondere über das Internet. Es können insbesondere weitere Steuerkanäle über weitere individuelle Kommunikationsplattformen zu weiteren Gruppen von Zielgeräten realisiert sein, die dann ebenfalls durch Übermitteln des Deaktivierungsbefehls vom zweiten Endgerät an die universelle Kommunikationsplattformen deaktiviert werden.

Die Zielgeräte können beispielsweise als Klimaanlagen, Wetterstationen, Überwachungskameras, Autos, Heizungssteuerungen, Kühlschränke, Steuergeräte für Rollläden, Bearbeitungsmaschinen, Zugangssysteme oder so genannte Wearables ausgeführt sein. Damit können die Zielgeräte beispielsweise Bausteine von so genannten Smart Home, Connected Car oder allgemeiner Internet of Things Anwendungen sein. Grundsätzlich sind alle elektrischen, elektronischen oder photonischen Geräte als Zielgeräte denkbar, die über eine Schnittstelle für einen Informationsaustausch verfügen. Ein Zielgerät wird entweder direkt oder über ein so genanntes Gateway mit dem Internet verbunden.

Unter einem Steuerkanal soll hier eine Kommunikationsverbindung zwischen einer individuellen Kommunikationsplattform und einer Gruppe von Zielgeräten, beispielsweise Zielgeräten eines bestimmten Herstellers, verstanden werden, über die Befehle an die Zielgeräte gesendet werden können. Die Befehle kann ein dazu berechtigter User wie beschrieben über eine universelle Kommunikationsplattform an die individuelle Kommunikationsplattform senden oder direkt beispielsweise über eine zugehörige App an der individuellen Kommunikationsplattform eingeben. Über den Steuerkanal ist es üblicherweise auch möglich, dass Zielgeräte Informationen über die universelle Kommunikationsplattform an das genannte Endgerät senden können. Es ist damit eine Kommunikation zwischen dem Endgerät des Users und den Zielgeräten möglich. Unter einer Kommunikation zwischen einem Endgerät des Users und einem Zielgerät soll hier das Austauschen von digitalen Informationen verstanden werden. Beispielsweise kann der User einen Befehl an das Zielgerät senden, beispielsweise eine Zieltemperatur einer Klimaanlage einstellen. Es ist auch möglich, dass der User Einstellungen an einem Zielgerät vornimmt, beispielsweise dass sich eine Klimaanlage von Montag bis Freitag um 8:00 Uhr morgens einschaltet. Das Zielgerät kann auf der anderen Seite beispielsweise Messwerte, beispielsweise die aktuelle Temperatur, Statusinformationen, wie beispielsweise ob es gerade aktiv ist oder auch Quittierungen von Befehlen an das Endgerät senden. Diese ganze Kommunikation wird auch unter dem Begriff "Internet of Things" (deutsch: "Internet der Dinge") oder abgekürzt loT zusammengefasst.

Unter einer Deaktivierung eines Steuerkanals soll hier verstanden werden, dass die beschriebene Kommunikationsverbindung zwischen der individuellen Kommunikationsplattform und der zugehörigen Gruppe von Zielgeräten unterbrochen wird, der User also keine Befehle mehr an die Zielgeräte der entsprechenden Gruppe von Zielgeräten senden kann. Dies gilt sowohl für Befehle, die von der universellen Kommunikationsplattform an die individuelle Kommunikationsplattform übermittelt werden sollen, also auch für Befehle, die direkt an der individuellen Kommunikationsplattform eingegeben werden.

Der User übermittelt den genannten einzigen Deaktivierungsbefehl von einem zweiten Endgerät, also nicht vom ersten Endgerät, über das er vor der Deaktivierung mit den Zielgeräten kommuniziert hat. Dies ist notwendig, da davon ausgegangen wird, dass der User keinen Zugriff mehr auf das erste Endgerät hat. Das erste Endgerät kann beispielsweise ein Mobiltelefon sein, das über die zugehörige Mobilfunknummer identifiziert wird. Das zweite Endgerät kann beispielsweise ein anderes Mobiltelefon mit einer anderen Mobilfunknummer, ein Tablet-Computer oder ähnliches sein. Der User kann den Deaktivierungsbefehl beispielsweise auf einer von der universellen Kommunikationsplattform zur Verfügung gestellten Internetseite eingeben, an der sich der User mit seinen Zugangsdaten anmelden kann.

Die genannten Kommunikationsplattformen sind insbesondere als Anwendungen oder Programme ausgeführt, die auf einem Server im Internet ausgeführt werden. Sie sind insbesondere auf unterschiedlichen Servern angeordnet, es können aber auch mehrere Kommunikationsplattformen auf einem Server angeordnet sein.

In Ausgestaltung der Erfindung wird die Deaktivierung der Steuerkanäle erst nach korrekter Übermittlung eines vom User vorher festgelegten Deaktivierungspassworts an die universelle Kommunikationsplattform durchgeführt. Damit wird zum einen verhindert, dass der User die Steuerkanäle versehentlich deaktiviert und zum anderen ein Missbrauch, also eine Deaktivierung der Steuerkanäle durch einen nicht berechtigten User verhindert. Somit wird eine sichere Deaktivierung der Steuerkanäle ermöglicht.

Das genannte Deaktivierungspasswort hat der User in einem früheren Stadium, beispielsweise bei der Einrichtung seines Userkontos bei der universellen Kommunikationsplattform festgelegt. Das Deaktivierungspasswort wird insbesondere in einem besonders gesicherten Bereich der universellen Kommunikationsplattform und insbesondere verschlüsselt abgespeichert und so gegen unbefugten Zugriff gesichert. Insbesondere fordert die universelle Kommunikationsplattform den User nach Empfang des Deaktivierungsbefehls zur Übermittlung bzw. Eingabe des Deaktivierungspassworts auf. Wird das Deaktivierungspasswort nicht richtig eingegeben, dann führt die universelle Kommunikationsplattform den Deaktivierungsbefehl nicht aus.

In Ausgestaltung der Erfindung sendet die universelle Kommunikationsplattform nach Erhalt des korrekten Deaktivierungspassworts über einen vorher vom User festgelegten Notfall-Kommunikationskanal ein Bestätigungspasswort an den User. Die Deaktivierung der Steuerkanäle wird erst nach korrekter Übermittlung des Bestätigungspassworts an die universelle Kommunikationsplattform durchgeführt. Das genannte Bestätigungspasswort ist insbesondere nur eine begrenzte Zeitdauer beispielsweise zwischen 5 und 10 Minuten gültig. Dies ermöglicht eine besonders sichere Deaktivierung der Steuerkanäle.

Der User legt den genannten Notfall-Kommunikationskanal ebenfalls in einem früheren Stadium, also beispielsweise bei der Einrichtung seines Userkontos bei der universellen Kommunikationsplattform fest. Als Notfall-Kommunikationskanal kann beispielsweise eine Mobilfunkverbindung zu einem vom ersten Endgerät unterschiedlichen Mobiltelefon, eine E-Mail Verbindung zu einem festgelegten E-Mail-Account, eine Chat-App oder eine Kommunikation über ein soziales Netzwerk dienen.

In Ausgestaltung der Erfindung verläuft die Kommunikation zwischen den Endgeräten und der universellen Kommunikationsplattform über ein Kommunikationsmodul, welches die Nutzung verschiedener Kommunikationskanäle der Endgeräte ermöglicht. Damit wird eine besonders einfache Kommunikation zwischen den Endgeräten und der universellen Kommunikationsplattform ermöglicht.

Ein derartiges Kommunikationsmodul ist beispielsweise Teil der universellen Kommunikationsplattform und ermöglicht eine Nutzung verschiedener Kommunikationskanäle der Endgeräte des Users. Unter einem Kommunikationskanal des Endgeräts wird dabei die Nutzung eines auf einem Endgerät installierten Programms oder App zur Kommunikation mit anderen Personen oder Diensten verstanden. Dabei handelt es sich allgemein um Apps zum Senden und Empfangen von elektronischen Nachrichten wie beispielsweise E-Mails, SMS, WhatsApp ®, Twitter ® oder Apps für Sprachsteuerungen. Der User kann damit auch die für die Kommunikation mit einem Zielgerät notwendigen Informationen, also so genannte Zielgeräte-Kontaktadressen eines Zielgeräts in einem Adressbuch ablegen, in dem er auch Kontaktadressen von Freunden, Bekannten oder Geschäftspartnern ablegt.

Der User sendet seine Befehle an die universelle Kommunikationsplattform damit als freien Text. Das Kommunikationsmodul verfügt über verschiedene Schnittstellenmodule, die jeweils eine Kommunikation mit einem Endgerät über einen speziellen Kommunikationskanal ermöglichen. Das Kommunikationsmodul setzt empfangene elektronische Nachrichten von Endgeräten so um, dass sie von der universellen Kommunikationsplattform empfangen werden können. Außerdem setzt es von der universellen Kommunikationsplattform empfangene Informationen so um, dass sie als elektronische Nachricht über ein Schnittstellenmodul und den zugehörigen Kommunikationskanal an ein Endgerät und damit an den User gesandt werden können.

Das Kommunikationsmodul und die universelle Kommunikationsplattform sind insbesondere so ausgeführt, dass der User einen bevorzugten Kommunikationskanal festlegen kann. Der User kann beispielsweise festlegen, dass Meldungen von Zielgeräten, so genannte Alerts oder Notifications immer über einen bestimmten Kommunikationskanal, beispielsweise per SMS an sein Endgerät gesandt werden. Die Einstellungen können entweder für alle Zielgeräte gelten oder auch für einzelne Gruppen von Zielgeräten oder einzelne Zielgeräte gemacht werden.

Die Auswahl eines bevorzugten Kommunikationsverfahrens kann beispielsweise wie in der DE 102011117777 B3 beschrieben durchgeführt werden.

Damit der User sich bei der Eingabe von Befehlen für die Zielgeräte nicht an fest vorgegebene Begriffe halten muss, sondern die Befehle als freien Text, beispielsweise "Klimaanlage in Raum 225 anmachen" formulieren kann, ist die universelle Kommunikationsplattform insbesondere mit einer ersten Wissensdatenbank und einer zweiten Wissensdatenbank verbunden. Die universelle Kommunikationsplattform sendet in diesem Fall die Eingaben des Users an die Wissensdatenbanken, welche dann die Eingabe interpretieren und damit versuchen, eine Intention des Users zu erkennen und an die individuelle Kommunikationsplattform zurück zu geben. Diese könnte beispielsweise in dem obigen Beispiel lauten "Klimaanlage Raum 225 aktivieren".

Es ist auch möglich, dass die universelle Kommunikationsplattform mit mehr als zwei, nur mit einer oder gar keiner Wissensdatenbank in Kommunikationsverbindung steht. Falls keine Wissensdatenbank verwendet wird, muss sich der User an festgelegte Befehle halten, die in der universellen Kommunikationsplattform abgelegt sind.

Es kann zusätzlich zu den genannten Steuerkanälen zwischen den individuellen Kommunikationsplattformen und Gruppen von Zielgeräten ein Haupt-Steuerkanal zwischen dem ersten Endgerät des Users und der universellen Kommunikationsplattform deaktiviert werden. Damit wird ein Missbrauch des ersten Endgeräts des Users besonders wirkungsvoll verhindert.

In Ausgestaltung der Erfindung leitet die universelle Kommunikationsplattform Bestätigungen der individuellen Kommunikationsplattformen über die Deaktivierung der Steuerkanäle an den User weiter. Insbesondere informiert die universelle Kommunikationsplattform in dem Fall, in dem sie von einer individuellen Kommunikationsplattform keine Bestätigung über die Deaktivierung der Steuerkanäle erhält, den User darüber. Damit bekommt der User einen guten Überblick, in welchen Fällen die Deaktivierung der Steuerkanäle erfolgreich war und in welchen nicht.

Die universelle Kommunikationsplattform stellt dem User die genannten Informationen dabei so zu Verfügung, dass er sie mit einem Endgerät, welches nicht dem ersten Endgerätentsprechen muss, empfangen kann. Sie kann die Informationen beispielsweise über den o.g. Notfall-Kommunikationskanal an den User senden.

Die universelle Kommunikationsplattform stellt dem User die genannten Informationen dabei so zu Verfügung, dass er sie mit einem Endgerät, welches nicht dem ersten Endgerätentsprechen muss, empfangen kann. Sie kann die Informationen beispielsweise über den o.g. Notfall-Kommunikationskanal an den User senden.

Die universelle Kommunikationsplattform kann dem User auch Kontaktinformationen der individuellen Kommunikationsplattformen, beispielsweise Notfall-Telefonnummern der einzelnen Hersteller zur Verfügung stellen, über die der User die Steuerkanäle eventuell ebenfalls deaktivieren oder den Stand der Deaktivierung erfragen kann.

Falls eine individuelle Kommunikationsplattform die beschriebene Möglichkeit zur Deaktivierung des betreffenden Steuerkanals nicht bietet, aber stattdessen eine Kontaktadresse, beispielsweise eine E-Mail-Adresse anbietet, so kann die universelle Kommunikationsplattform die individuelle Kommunikationsplattform über diese Kontaktadresse informieren, dass der User den betreffenden Steuerkanal deaktivieren möchte.

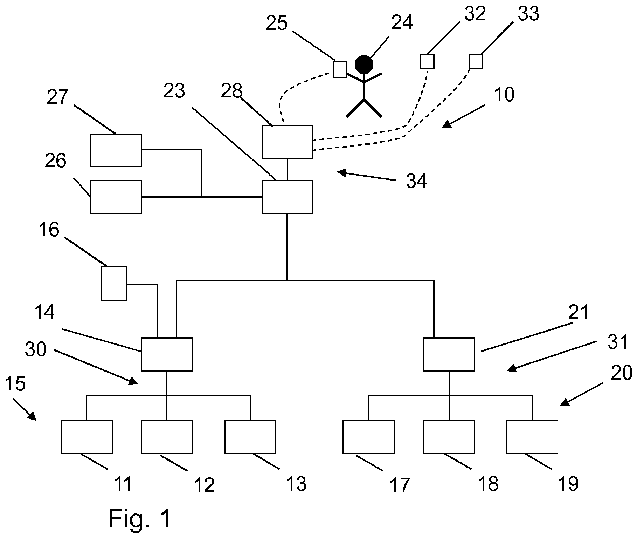

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Dabei zeigt
- Fig. 1: ein Kommunikationssystem, mittels welchem ein User über Steuerkanäle Gruppen von Zielgeräten ansteuern kann.

Gemäß Fig. 1 stehen bei einem Kommunikationssystem 10 Zielgeräte 11, 12, 13 über das Internet mit einer ersten individuellen Kommunikationsplattform 14 in Kommunikationsverbindung. Die Zielgeräte 11, 12, 13 bilden damit eine erste Gruppe 15 von Zielgeräten und können so als erste Zielgeräte bezeichnet werden. Ihnen ist gemeinsam, dass sie alle vom selben ersten Hersteller stammen. Die Kommunikation zwischen der ersten individuellen Kommunikationsplattform 14 und den Zielgeräten 11, 12, 13 erfolgt mittels eines ersten Zielgeräte-Protokolls, das vom ersten Hersteller vorgegeben wird. Der erste Hersteller stellt auch ein Programm, eine so genannte App 16 zur Verfügung, die über das Internet mit der ersten Kommunikationsplattform 14 und damit mit den Zielgeräten 11, 12, 13 der ersten Gruppe 15 von Zielgeräten kommunizieren kann. Die Kommunikation zwischen der App 16 und der ersten individuellen Kommunikationsplattform 14 erfolgt dabei über ein erstes spezifisches Endgeräte-Protokoll.

Zielgeräte 17, 18, 19 bilden eine zweite Gruppe 20 von Zielgeräten und stehen über das Internet mit einer zweiten individuellen Kommunikationsplattform 21 in Kommunikationsverbindung. Die Zielgeräte 17, 18, 19 können als zweite Zielgeräte bezeichnet werden. Die Zielgeräte 17, 18, 19 der zweiten Gruppe 20 von Zielgeräten stammen alle vom selben zweiten Hersteller, der für die Kommunikation zwischen der zweiten individuellen Kommunikationsplattform 21 und den Zielgeräten 17, 18, 19 ein zweites Zielgeräte-Protokoll vorgibt, welches sich vom ersten Zielgeräte-Protokoll unterscheidet. Der zweite Hersteller stellt keine App zur Verfügung, die über das Internet mit der zweiten Kommunikationsplattform 21 und damit mit den Zielgeräten 17, 18, 19 der zweiten Gruppe 20 von Zielgeräten kommunizieren kann. Die zweite individuelle Kommunikationsplattform 21 ist aber so ausgeführt, dass mit ihr über ein zweites spezifisches Endgeräte-Protokoll, welches sich vom ersten spezifischen Endgeräte-Protokoll unterscheidet, kommuniziert werden kann.

Die herstellerspezifische App 16 kann beispielsweise auf einem mobilen Endgerät, beispielsweise in Form eines Smartphones eines Users ausgeführt werden.

Die beiden individuellen Kommunikationsplattformen 14, 21 können an die ihnen zugeordneten Zielgeräte Befehle senden, wie beispielsweise an eine Klimaanlage den Befehl, sich einzuschalten. Sie können auch Informationen von den ihnen zugeordneten Zielgeräten empfangen, insbesondere Messwerte, wie beispielsweise eine gemessene Temperatur oder Statusmeldungen, wie den aktuellen Betriebszustand eines Zielgeräts.

Die Zielgeräte können beispielsweise als Klimaanlagen, Wetterstationen, Überwachungskameras, Autos, Heizungssteuerungen, Kühlschränke, Steuergeräte für Rollläden, Bearbeitungsmaschinen oder Zugangssysteme ausgeführt sein

Die erste individuelle Kommunikationsplattform 14 und die zweite individuelle Kommunikationsplattform 21 sind über das Internet mit einer universellen Kommunikationsplattform 23 verbunden. Um diese Kommunikation zu ermöglichen, stellen die Hersteller der jeweiligen Zielgeräte beziehungsweise die Betreiber der jeweiligen individuellen Kommunikationsplattform 14, 21 jeweils eine Programmierschnittstelle zur Verfügung, die von der universellen Kommunikationsplattform 23 genutzt wird. Die universelle Kommunikationsplattform 23 kommuniziert damit mit der ersten individuellen Kommunikationsplattform 14 mit dem ersten Endgeräte-Protokoll und mit der zweiten individuellen Kommunikationsplattform 21 mit dem zweiten Endgeräte-Protokoll. Damit kann die universelle Kommunikationsplattform 23 über die zugehörige universelle Kommunikationsplattform 14, 21 sowohl mit den Zielgeräten 11, 12, 13 der ersten Gruppe 15, als auch mit den Zielgeräten 17, 18, 19 der zweiten Gruppe 20 kommunizieren.

Ein User 24 ist über ein erstes mobiles Endgerät 25, beispielsweise ein Smartphone und das Internet über ein Kommunikationsmodul 28 mit der universellen Kommunikationsplattform 23 verbunden. Damit kann der User 24 über das erste Endgerät 25, das Kommunikationsmodul 28, die universelle Kommunikationsplattform 23 und die erste individuelle Kommunikationsplattform 14 mit den Zielgeräten 11, 12, 13 der ersten Gruppe 15 von Zielgeräten und über das erste Endgerät 25, das Kommunikationsmodul 28, die universelle Kommunikationsplattform 23 und die zweite individuelle Kommunikationsplattform 21 mit den Zielgeräten 17, 18, 19 der zweiten Gruppe 20 von Zielgeräten kommunizieren und damit die Zielgeräte 11, 12, 13, 17, 18, 19 ansteuern.

Das Kommunikationssystem 10 weist damit einen ersten Steuerkanal 30 auf, der vom ersten Endgerät 25 des Users 24, das Kommunikationsmodul 28, die universelle Kommunikationsplattform 23 und die erste individuelle Kommunikationsplattform 14 zur ersten Gruppe 15 von Zielgeräten 11, 12, 13 verläuft. Der erste Steuerkanal 30 ist damit über die erste individuelle Kommunikationsplattform 14 zur ersten Gruppe 15 von Zielgeräten 11, 12, 13 realisiert.

Das Kommunikationssystem 10 weist außerdem einen zweiten Steuerkanal 31 auf, der vom ersten Endgerät 25 des Users 24, das Kommunikationsmodul 28, die universelle Kommunikationsplattform 23 und die zweite individuelle Kommunikationsplattform 21 zur zweiten Gruppe 20 von Zielgeräten 17, 18, 19 verläuft. Der zweite Steuerkanal 31 ist damit über die zweite individuelle Kommunikationsplattform 21 zur zweiten Gruppe 20 von Zielgeräten 17, 18, 19 realisiert.

Darüber hinaus weist das Kommunikationssystem 10 einen Haupt-Steuerkanal 34 auf, der zwischen dem ersten Endgerät 25 und der universellen Kommunikationsplattform 23 verläuft.

Die genannten Kommunikationsplattformen 14, 21, 23 sind als Anwendungen oder Programme ausgeführt, die auf einem Server im Internet ausgeführt werden. Sie sind insbesondere auf unterschiedlichen Servern angeordnet, es können aber auch mehrere Kommunikationsplattformen auf einem Server angeordnet sein.

Das Kommunikationsmodul 28 ermöglicht eine Nutzung verschiedener Kommunikationskanäle des Endgeräts 25. Unter einem Kommunikationskanal des Endgeräts wird dabei die Nutzung eines auf dem ersten Endgerät 25 installierten Programms oder App zur Kommunikation mit anderen Personen oder Diensten verstanden. Dabei handelt es sich allgemein um Apps zum Senden und Empfangen von elektronischen Nachrichten wie beispielsweise E-Mails, SMS, WhatsApp ®, Twitter ® oder Apps für Sprachsteuerungen. Der User 24 kann damit auch die für die Kommunikation mit einem Zielgerät 11, 12, 13, 17, 18, 19 notwendigen Informationen, also so genannte Zielgeräte-Kontaktadressen eines Zielgeräts in einem Adressbuch ablegen, in dem er auch Kontaktadressen von Freunden, Bekannten oder Geschäftspartnern ablegt.

Der User 24 sendet seine Befehle an die universelle Kommunikationsplattform 23 damit als freien Text. Das Kommunikationsmodul 28 verfügt über verschiedene, nicht dargestellte Schnittstellenmodule, die jeweils eine Kommunikation mit dem ersten Endgerät 25 über einen speziellen Kommunikationskanal ermöglichen. Das Kommunikationsmodul 28 setzt empfangene elektronische Nachrichten vom ersten Endgerät 25 so um, dass sie von der universellen Kommunikationsplattform 23 empfangen werden können. Außerdem setzt es von der universellen Kommunikationsplattform 23 empfangene Informationen so um, dass sie als elektronische Nachricht über ein Schnittstellenmodul und den zugehörigen Kommunikationskanal an das erste Endgerät 25 und damit an den User gesandt werden können.

Das Kommunikationsmodul 28 und die universelle Kommunikationsplattform 23 sind so ausgeführt, dass der User 24 einen bevorzugten Kommunikationskanal festlegen kann. Der User 24 kann beispielsweise festlegen, dass Meldungen von Zielgeräten, so genannte Alerts oder Notifications immer über einen bestimmten Kommunikationskanal, beispielsweise per SMS an das erste Endgerät 25 gesandt werden. Die Einstellungen können entweder für alle Zielgeräte 11, 12, 13, 17, 18, 19 gelten oder auch für einzelne Gruppen von Zielgeräten oder einzelne Zielgeräte gemacht werden.

Damit der User 24 sich bei der Eingabe von Befehlen für die Zielgeräte 11, 12, 13, 17, 18, 19 nicht an fest vorgegebene Begriffe halten muss, sondern die Befehle als freien Text, beispielsweise "Klimaanlage in Raum 225 anmachen" formulieren kann. Ist die universelle Kommunikationsplattform 23 über das Internet mit einer ersten Wissensdatenbank 26 und einer zweiten Wissensdatenbank 27 verbunden. Die universelle Kommunikationsplattform 23 sendet die Eingaben des Users 24 an die Wissensdatenbanken 26, 27, welche dann die Eingabe interpretieren und damit versuchen, eine Intention des Users 24 zu erkennen und an die individuelle Kommunikationsplattform 23 zurück zu geben. Diese könnte beispielsweise in dem obigen Beispiel lauten "Klimaanlage Raum 225 aktivieren". Neben der abgeleiteten Intention liefern die Wissensdatenbanken 26, 27 zusätzlich eine so genannte Trefferwahrscheinlichkeit. Diese gibt die Wahrscheinlichkeit an, mit der die genannte Intention der tatsächlichen Intention des Users 24 entspricht. Bei abweichenden Rückmeldungen übernimmt die universelle Kommunikationsplattform 23 die Intention mit der höheren Trefferwahrscheinlichkeit. Sind die Trefferwahrscheinlichkeiten beider Wissensdatenbanken 26, 27 unterhalb eines Grenzwerts von beispielsweise 75 %, so stellt die universelle Kommunikationsplattform 23 eine Rückfrage an den User 24. Diese ist insbesondere so formuliert, dass sie fragt, ob die abgeleitete Intention mit der höheren Trefferwahrscheinlichkeit korrekt ist.

In der universellen Kommunikationsplattform 23 sind Benennungen der einzelnen Zielgeräte 11, 12, 13, 17, 18, 19 gespeichert. Beispielsweise ist gespeichert, dass die Klimaanlage in Raum 225 dem Zielgerät 11 entspricht. Damit kann ein vom User 24 eingegebener und von einer der Wissensdatenbanken 26, 27 erkannter Befehl an das richtige Zielgerät gesandt werden.

Es ist auch möglich, dass die universelle Kommunikationsplattform mit mehr als zwei, nur mit einer oder gar keiner Wissensdatenbank in Kommunikationsverbindung steht. Falls keine Wissensdatenbank verwendet wird, muss sich der User an festgelegte Befehle halten, die in der universellen Kommunikationsplattform abgelegt sind.

Damit ein User 24 über sein erstes Endgerät 25 mit einem der Zielgeräte 11, 12, 13, 17, 18, 19 kommunizieren kann, muss das entsprechende Zielgerät dem User 24 zugeordnet sein. Die Zuordnung kann beispielsweise entsprechend der folgenden Beschreibung vorgenommen werden. Es sind aber auch andere Möglichkeiten für die Durchführung der Zuordnung möglich.

Um beispielsweise das Zielgerät 11 dem User 24 zuzuordnen, wird das Zielgerät 11 zuerst mit dem Internet verbunden. Auf dem Zielgerät 11 ist ein Aufkleber mit einem QR-Code angebracht. Der QR-Code enthält eine Adresse einer Internetseite, beispielsweise "www.xyz.com/1234567". Diese einmalige Internetseite ist eindeutig dem Zielgerät 11 zugeordnet. Sobald der User 24 mit dem ersten Endgerät 25 den QR-Code einscannt, wird die Internetseite im Internetbrowser des ersten Endgeräts 25 geöffnet.

Die genannte Internetseite wird von der universellen Kommunikationsplattform 23 bereitgestellt. Die universelle Kommunikationsplattform 23 prüft zunächst, ob das der Internetseite zugeordnete Zielgerät, also hier das Zielgerät 11 aktuell keinem User zugeordnet ist. Ist dies der Fall, so fordert die universelle Kommunikationsplattform 23 über die Internetseite zunächst den User 24 dazu auf, eine oder mehrere User-Kontaktadressen für einen oder mehrere Kommunikationskanäle einzugeben. Der User kann dazu insbesondere auf eine spezielle Internetseite geführt werden, auf der die Informationen eingegeben werden können. Damit kann verhindert werden, dass die Informationen auf dem Endgerät in einem Verlaufsprotokoll gespeichert werden. Der User 24 kann beispielsweise seine Telefonnummer für SMS oder WhatsApp®-Kommunikation oder seine E-Mail Adresse eingeben. Sobald der User 24 die User-Kontaktadressen eingeben hat, stellt die universelle Kommunikationsplattform 23 über die Internetseite Zielgerät-Kontaktadressen für die Kommunikationskanäle zur Verfügung, für die der User User-Kontaktadressen eingegeben hat. Die Zielgerät-Kontaktadressen werden dazu auf der Internetseite angezeigt. Zusätzlich wird eine digitale Visitenkarte in Form einer vCard zum Herunterladen angeboten, welche die genannten Zielgerät-Kontaktadressen enthält. Durch das Herunterladen der vCard können die Zielgerät-Kontaktadressen in das Adressbuch des Users 24 auf dem ersten Endgerät 25 übernommen werden. Der User 24 hat außerdem die Möglichkeit, einen bevorzugten Kommunikationskanal, beispielsweise SMS auszuwählen, über den im Normalfall die Kommunikation mit dem Zielgerät 11 ablaufen soll.

In der universellen Kommunikationsplattform 23 sind Informationen zum Zielgerät 11 abgespeichert. Es sind beispielsweise der Hersteller, der Typ und eine Seriennummer abgespeichert. Die universelle Kommunikationsplattform 23 weiß damit, dass das Zielgerät 11 vom ersten Hersteller stammt, der die erste individuelle Kommunikationsplattform 14 betreibt. In dieser ersten individuellen Kommunikationsplattform 14 ist ein dem Zielgerät 11 zugeordneter Autorisierungscode in Form eines so genannten Tokens abgelegt. Der Token besteht beispielsweise aus einem 16 - 20-stelligen Code aus Ziffern und Buchstaben. Sobald der User 24 zumindest eine User-Kontaktadresse auf der genannten Internetseite eingegeben hat, fordert die universelle Kommunikationsplattform 23 den Token des Zielgeräts 11 von der ersten individuellen Kommunikationsplattform 14 an und zeigt den Token auf der Internetseite an.

Mit der Anzeige des Tokens auf der Internetseite fordert die universelle Kommunikationsplattform 23 den User 24 dazu auf, über einen der Kommunikationskanäle, für die er eine User-Kontaktadresse angegeben hat, eine elektronische Nachricht an das Zielgerät, also an eine der Zielgerät-Kontaktadressen zu senden. In der elektronischen Nachricht muss der Token enthalten sein. Außerdem kann der User 24 dem Zielgerät 11 auch einen Namen geben. Die elektronische Nachricht wird von der universellen Kommunikationsplattform 23 empfangen und ausgewertet. Wenn die elektronische Nachricht als Absender die entsprechende User-Kontaktadresse aufweist und den korrekten Token enthält, dann wird ein korrekter Empfang der elektronischen Nachricht festgestellt und die universelle Kommunikationsplattform 23 ordnet das Zielgerät 11 dem User 24 zu. Der User 24 kann ab diesem Zeitpunkt über das erste Endgerät 25 mit dem Zielgerät 11 kommunizieren und es ansteuern.

Auf diese Weise kann sich der User 24 alle Zielgeräten 11, 12, 13, 17, 18, 19 zuordnen und sie ansteuern. Damit kann der User vor über das erste Endgerät 25, die universelle Kommunikationsplattform 23 und den ersten Steuerkanal 30 die erste Gruppe 15 von Zielgeräten 11, 12, 13 und über das erste Endgerät 25, die universelle Kommunikationsplattform 23 und den zweiten Steuerkanal 31 die zweite Gruppe 20 von Zielgeräten 17, 18, 19 ansteuern.

Der User 24 hat die Möglichkeit, durch Übermitteln eines einzigen Deaktivierungsbefehls von einem zweiten Endgerät 32 an die universelle Kommunikationsplattform 23 den ersten und zweiten Steuerkanal 30, 31 zu deaktivieren. Dies kann beispielsweise notwendig sein, wenn sich jemand unbefugt Zugriff auf sein erstes Endgerät 25 verschafft, es also beispielsweise gestohlen hat. In diesem Fall ist es wichtig, dass die Ansteuerung der Zielgeräte 11, 12, 13, 17, 18, 19 möglichst schnell deaktiviert werden kann. Wenn der User 24 noch Zugriff auf das erste Endgerät 25 hat und er dennoch den ersten und zweiten Steuerkanal 30, 31 deaktivieren möchte, kann die Übermittlung des einzigen Deaktivierungsbefehls auch vom ersten Endgerät 25 aus erfolgen.

Dazu hat der User 24 bereits bei seiner Anmeldung an der universellen Kommunikationsplattform 23 ein Deaktivierungspasswort festgelegt, das von der universellen Kommunikationsplattform 23 in einem besonders gesicherten Bereich abgespeichert wird. Die Anmeldung an der universellen Kommunikationsplattform 23 ermöglicht dem User 24, über unterschiedliche Endgeräte mit der universellen Kommunikationsplattform 23 zu kommunizieren. Er muss dazu lediglich seine Zugangsdaten in Form von User-ID und Passwort angeben, die auch in den Endgeräten gespeichert sein können, so dass sie nicht vor jeder Kommunikation eingegeben werden müssen.

Damit kann der User auch nach Verlust des ersten Endgeräts 25 beispielsweise mit einem zweiten Endgerät 32 noch mit der universellen Kommunikationsplattform 23 kommunizieren. Dazu kann er wie oben beschrieben verschiedene Kommunikationskanäle verwenden, also beispielsweise eine SMS an die universelle Kommunikationsplattform 23 senden. Die universelle Kommunikationsplattform 23 stellt dazu insbesondere eine spezielle Notfall-Nummer zur Verfügung, die auch im Internet veröffentlicht wird. Die Deaktivierung der Steuerkanäle kann dann beispielsweise durch Senden des speziellen Deaktivierungsbefehls an die genannte Notfall-Nummer angefordert werden.

Nach Erhalt des Deaktivierungsbefehls sendet die universelle Kommunikationsplattform 23 eine Aufforderung zur Eingabe des festgelegten Deaktivierungspassworts an das zweite Endgerät 32. Wenn der User 24 das korrekte Deaktivierungspasswort eingegeben hat und dieses an die universelle Kommunikationsplattform 23 korrekt übermittelt wurde, dann sendet die universelle Kommunikationsplattform 23 über einen vorher vom User 24 festgelegten Notfall-Kommunikationskanal ein Bestätigungspasswort an den User 24. Der Notfall-Kommunikationskanal wird vom User 24 ebenfalls bei der Anmeldung an der universellen Kommunikationsplattform 23 festgelegt. Der User 24 kann beispielsweise als Notfall-Kommunikationskanal festlegen, dass das Bestätigungspasswort in einer SMS Nachricht an ein drittes Endgerät 33 gesendet werden soll. Da das Bestätigungspasswort nur eine begrenzte Zeitdauer beispielsweise zwischen 5 und 10 Minuten gültig ist, muss der User 24 das Bestätigungspasswort innerhalb der genannten Zeitdauer an die universelle Kommunikationsplattform 23 übermitteln, um mit der Deaktivierung der Steuerkanäle fortzufahren.

Wenn alle Passwörter korrekt an die universelle Kommunikationsplattform 23 übermittelt wurden, fragt die universelle Kommunikationsplattform 23 noch einmal ab, ob die Deaktivierung der Steuerkanäle wirklich vorgenommen werden soll. Wird diese Abfrage vom User 24 mit "Ja" beantwortet, so sendet die universelle Kommunikationsplattform 23 an die erste und die zweite individuelle Kommunikationsplattform 14, 21 jeweils den Befehl, die Kommunikationsverbindungen zwischen den universellen Kommunikationsplattformen 14, 21 und den zugehörigen Zielgeräten 11, 12, 13, 17, 18, 19 zu unterbrechen. Damit sind beide Steuerkanäle 30 und 31 deaktiviert.

Zusätzlich wird der Haupt-Steuerkanal 34 zwischen dem ersten Endgerät 25 und der universellen Kommunikationsplattform 23 deaktiviert. Damit kann keine Kommunikation zwischen dem ersten Endgerät 25 und der universellen Kommunikationsplattform 23 mehr stattfinden.

Manche individuellen Kommunikationsplattformen senden Bestätigungsmeldungen über die Deaktivierung der Kommunikationsverbindung zu den Zielgeräten an die universelle Kommunikationsplattform 23. Diese leitet die Bestätigungen dieser individuellen Kommunikationsplattformen an das zweite Endgerät 32 und damit an den User 24 weiter. Die universelle Kommunikationsplattform 23 informiert den User 24 auch darüber, wenn sie von einer individuellen Kommunikationsplattform 14, 21 keine Bestätigung über die Deaktivierung der Steuerkanäle erhält.

Die universelle Kommunikationsplattform 23 stellt dem User 24 zusätzlich Kontaktinformationen der individuellen Kommunikationsplattformen 14, 21, beispielsweise Notfall-Telefonnummern der einzelnen Hersteller zur Verfügung, über die der User 24 die Steuerkanäle eventuell ebenfalls deaktivieren oder den Stand der Deaktivierung erfragen kann.

Falls eine individuelle Kommunikationsplattform die beschriebene Möglichkeit zur Deaktivierung des betreffenden Steuerkanals nicht bietet, aber stattdessen eine Kontaktadresse, beispielsweise eine E-Mail-Adresse anbietet, so kann die universelle Kommunikationsplattform die individuelle Kommunikationsplattform über diese Kontaktadresse informieren, dass der User den betreffenden Steuerkanal deaktivieren möchte.

## Patentansprüche

1. Verfahren zur Deaktivierung von Steuerkanälen (30, 31) zwischen individuellen Kommunikationsplattformen (14, 21) und Gruppen (15, 20) von Zielgeräten (11, 12, 13, 17, 18, 19), wobei
- ein erster Steuerkanal (30) über eine erste individuelle Kommunikationsplattform (14) zu einer ersten Gruppe (15) von Zielgeräten (11, 12, 13) realisiert ist,
- ein zweiter Steuerkanal (31) über eine zweite individuelle Kommunikationsplattform (21) zu einer zweiten Gruppe (20) von Zielgeräten (17, 18, 19) realisiert ist,
- ein User (24) vor der Deaktivierung der Steuerkanäle (30, 31) über ein erstes Endgerät (25), eine universelle Kommunikationsplattform (23) und den ersten Steuerkanal (30) die erste Gruppe (15) von Zielgeräten (11, 12, 13) und über das erste Endgerät (25), die universelle Kommunikationsplattform (23) und den zweiten Steuerkanal (31) die zweite Gruppe (20) von Zielgeräten (17, 18, 19) ansteuern kann und
- der User (24) durch Übermitteln eines einzigen Deaktivierungsbefehls von einem Endgerät (25, 33) an die universelle Kommunikationsplattform (23) den ersten Steuerkanal (30) und den zweiten Steuerkanal (31) deaktiviert, wobei die universelle Kommunikationsplattform (23), nach Empfang des Deaktivierungsbefehls , jeweils einen Befehl an die erste und zweite individuelle Kommunikationsplattform (14, 21) sendet, die Kommunikationsverbindung zwischen der ersten individuellen Kommunikationsplattform (14) und der ersten Gruppe von Zielgeräten (11-13) und die Kommunikationsverbindung zwischen der zweiten individuellen Kommunikationsplattform (21) und der zweiten Gruppe von Zielgeräten (17-19) zu unterbreche.

2. Verfahren nach Anspruch 2,
**dadurch gekennzeichnet, dass**
die Deaktivierung der Steuerkanäle (30, 31) erst nach korrekter Übermittlung eines vom User (24) vorher festgelegten Deaktivierungspassworts an die universelle Kommunikationsplattform (23) durchgeführt wird.

3. Verfahren nach Anspruch 1 oder 2,
**dadurch gekennzeichnet, dass**
die universelle Kommunikationsplattform (23) nach Erhalt des korrekten Deaktivierungspassworts über einen vorher vom User (24) festgelegten Notfall-Kommunikationskanal ein Bestätigungspasswort an den User (24) sendet und die Deaktivierung der Steuerkanäle (30, 31) erst nach korrekter Übermittlung des Bestätigungspassworts an die universelle Kommunikationsplattform (23) durchgeführt wird.

4. Verfahren nach Anspruch 3,
**dadurch gekennzeichnet, dass**
das genannte Bestätigungspasswort nur eine begrenzte Zeitdauer gültig ist.

5. Verfahren nach einem der Ansprüche 1 bis 4,
**dadurch gekennzeichnet, dass**
die Kommunikation zwischen den Endgeräten (25, 32, 33) und der universellen Kommunikationsplattform (23) über ein Kommunikationsmodul (28) verläuft, welches die Nutzung verschiedener Kommunikationskanäle der Endgeräte (25, 32, 33) ermöglicht.

6. Verfahren nach einem der Ansprüche 1 bis 5,
**dadurch gekennzeichnet, dass**
die universelle Kommunikationsplattform (23) Bestätigungen der individuellen Kommunikationsplattformen (14, 21) über die Deaktivierung der Steuerkanäle (30, 31) an den User (24) weiterleitet.

7. Verfahren nach Anspruch 6,
**dadurch gekennzeichnet, dass**
die universelle Kommunikationsplattform (23) in dem Fall, in dem sie von einer individuellen Kommunikationsplattform (14, 21) keine Bestätigung über die Deaktivierung der Steuerkanäle (30, 31) erhält, den User (24) darüber informiert.

## Claims

1. A method for deactivating control channels (30, 31) between individual communication platforms (14, 21) and groups (15, 20) of target devices (11, 12, 13, 17, 18, 19), whereby
- a first control channel (30) to a first group (15) of target devices (11, 12, 13) is realized via a first individual communication platform (14),
- a second control channel (31) to a second group (20) of target devices (17, 18, 19) is realized via a second individual communication platform (21),
- before deactivation of the control channels (30, 31), a user (24) can control the first group (15) of target devices (11, 12, 13) via a first terminal device (25), a universal communication platform (23), and the first control channel (30), and control the second group (20) of target devices (17, 18, 19) via the first terminal device (25), the universal communication platform (23), and the second control channel (31), and
- the user (24) deactivates the first control channel (30) and the second control channel (31) by transmitting a single deactivation command from a terminal device (25, 33) to the universal communication platform (23), whereby a main control channel (34) between the first terminal (25) of the user (24) and the universal communication platform (23) is deactivated in addition to the control channels (30, 31) between the individual communication platforms (14, 21) and groups (15, 20) of target devices (11, 12, 13, 17, 18, 19).

2. A method according to according to claim 2,
**characterized in that**
the control channels (30, 31) are only deactivated after a user-defined (24) deactivation password is transmitted correctly to the universal communication platform (23).

3. A method according to claim 1 or 2,
**characterized in that**
the universal communication platform (23), after receiving the correct deactivation password, sends a confirmation password to the user (24) via an emergency communication channel previously specified by the user (24) and deactivates the control channels (30, 31) only after correct transmission of the confirmation password to the universal communication platform (23).

4. A method according to claim 3,
**characterized in that**
the confirmation password is only valid for a limited period of time.

5. A method according to one of claims 1 to 4,
**characterized in that**
the communication between the terminal devices (25, 32, 33) and the universal communication platform (23) is performed via a communication module (28), which allows the use of different communication channels of the terminal devices (25, 32, 33).

6. A method according to one of claims 1 to 5,
**characterized in that**
the universal communication platform (23) forwards confirmations of the deactivation of the control channels (30, 31) from the individual communication platforms (14, 21) to the user (24).

7. A method according to claim 6,
**characterized in that**
in the event the universal communication platform (23) does not receive confirmation of the deactivation of the control channels (30, 31) from an individual communication platform (14, 21), the universal communication platform (23) informs the user (24) of this.

## Revendications

1. Procédé pour désactiver des canaux de commande (30, 31) entre des plates-formes de communication individuelles (14, 21) et des groupes (15, 20) d'appareils cibles (11, 12, 13, 17, 18, 19),
- un premier canal de commande (30) étant mis en oeuvre via une première plate-forme de communication individuelle (14) vers un premier groupe (15) d'appareils cibles (11, 12, 13)
- un deuxième canal de commande (31) étant mis en œuvre via une deuxième plate-forme de communication individuelle (21) vers un deuxième groupe (20) d'appareils cibles (17, 18, 19)
- un utilisateur (24) pouvant, avant de désactiver les canaux de commande (30, 31), commander le premier groupe (15) d'appareils cibles (11, 12, 13) via un premier terminal (25), une plate-forme de communication universelle (23) et le premier canal de commande (30) et le second groupe (20) d'appareils cibles (17, 18, 19) via le premier terminal (25), la plate-forme de communication universelle (23) et le second canal de commande (31), et
- l'utilisateur (24) désactive le premier canal de commande (30) et le deuxième canal de commande (31) en transmettant un seul ordre de désactivation depuis un terminal (25, 33) à la plate-forme de communication universelle (23),
la désactivation étant effectuée en envoyant un ordre, les liens de communication entre les plates-formes de communication universelles (14, 21) et les appareils cibles associés (11, 12, 13, 17, 18, 19) étant établis depuis la plate-forme de communication universelle (23) aux première et deuxième plates-formes de communication individuelles (14, 21).

2. Procédé selon la revendication 2,
**caractérisé par le fait que**
la désactivation des canaux de commande (30, 31) n'est effectuée qu'après transmission correcte à la plate-forme de communication universelle (23) d'un mot de passe de désactivation préalablement défini par l'utilisateur (24).

3. Procédé selon la revendication 1 ou 2,
**caractérisé par le fait que**
la plate-forme de communication universelle (23), après avoir reçu le mot de passe de désactivation correct, envoie un mot de passe de confirmation à l'utilisateur (24) via un canal de communication d'urgence préalablement défini par l'utilisateur (24), et la désactivation des canaux de commande (30, 31) n'est effectuée qu'après que le mot de passe de confirmation ait été correctement transmis à la plate-forme de communication universelle (23).

4. Procédé selon la revendication 3,
**caractérisé par le fait que**
ce mot de passe de confirmation n'est valable que pour une période limitée.

5. Procédé selon l'une des revendications 1 à 4,
**caractérisé par le fait que**
la communication entre les terminaux (25, 32, 33) et la plate-forme de communication universelle (23) se fait par l'intermédiaire d'un module de communication (28) permettant l'utilisation de différents canaux de communication des terminaux (25, 32, 33).

6. Procédé selon l'une des revendications 1 à 5,
**caractérisé par le fait que**
la plate-forme de communication universelle (23) transmet à l'utilisateur (24) les confirmations des plates-formes de communication individuelles (14, 21) concernant la désactivation des canaux de commande (30, 31).

7. Procédé selon la revendication 6,
**caractérisé par le fait que**
la plate-forme de communication universelle (23), dans le cas où elle ne reçoit pas un accusé de confirmation des canaux de commande (30, 31) d'une plate-forme de communication individuelle (14, 21), en informe l'utilisateur (24).
